# EUROPEAN PATENT SPECIFICATION

(11) **EP 3 255 921 B1**
(45) Date of publication and mention of the grant of the patent: **13.01.2021**
(21) Application number: 16746606.9
(22) Date of filing: 02.02.2016
(51) Int. Cl.: H04W 28/08, H04M 11/00, H04W 4/00, H04W 72/04

(54) **CONTROL DEVICE, COMMUNICATION DEVICE, CONTROL METHOD AND PROGRAM**
STEUERUNGSVORRICHTUNG, KOMMUNIKATIONSVORRICHTUNG, STEUERUNGSVERFAHREN UND PROGRAMM
DISPOSITIF DE COMMANDE, DISPOSITIF DE COMMUNICATION, PROCÉDÉ DE COMMANDE ET PROGRAMME

(30) Priority: 06.02.2015 JP 2015022325
(43) Date of publication of application: 13.12.2017
(73) Proprietor: KDDI Research, Inc., Fujimino-shi, Saitama 356-8502 (JP)
(72) Inventor: YAMAMOTO, Toshiaki, Saitama 356-8502 (JP); OHSEKI, Takeo, Saitama 356-8502 (JP); SUEGARA, Yasuhiro, Saitama 356-8502 (JP)
(74) Representative: Pitchford, James Edward
(86) International application number: PCT/JP2016/053011
(87) International publication number: WO 2016/125775

(56) References cited:
- EP-A1- 2 811 779
- WO-A1-2014/045319
- JP-A- 2014 027 548
- JP-A- 2014 230 037
- US-A1- 2013 208 587

## Description

### TECHNICAL FIELD

The present invention relates to a control apparatus, a communication apparatus, a control method, and a program and, more specifically, to a communication control technique in a radio communication system with an aggregation of different types of radio communication techniques.

### BACKGROUND ART

The third generation partnership project (3GPP) has proposed a technique of utilizing Long Term Evolution (LTE) in cooperation with a wireless LAN. For example, NPL 1 has proposed the integration of LTE and a wireless LAN, like LTE carrier aggregation at the radio link control (RLC) layer.

When an LTE base station and a wireless LAN access point (AP) transmit signals (packets) to one radio terminal in cooperation with each other, the packets to be transmitted to the one radio terminal are distributed to the LTE base station and the wireless LAN AP. The LTE base station and the wireless LAN AP transmit the packets, which have been distributed to them, to the same radio terminal.

### CITATION LIST

### NON PATENT LITERATURE

NPL 1: Qualcomm, RP-140739, "Motivation for LTE-WiFi Aggregation", 3GPP, June 2014

Further background art is provided in US 2013/208587 A1 and EP 2 811 779 A1.

US 2013/208587 A1 refers to a coexistence gap pattern, whereby one radio access technology (RAT) is permitted to coexist with another RAT, and discloses a method of dynamically changing the parameters of a coexistence gap pattern, such as the duty cycle, to adapt to both the RAT traffic and the presence of other secondary users.

EP 2 811 779 A1 discloses a system, user equipment (UE) and method for implementing multi-network joint transmission. The system includes a core network and an access network; wherein the access network includes a 3GPP access network element and a wireless LAN (WLAN) access network element, and the core network comprises a 3GPP core network element.

The 3GPP access network element is connected to the core network element through a network interface, connected to the WLAN access network element through a traffic offload interface, and connected to a UE through a 3GPP wireless interface.

### SUMMARY OF INVENTION

### TECHNICAL PROBLEM

An LTE base station communicates with one or more radio terminals based on scheduling for allocating a resource block having a predetermined frequency bandwidth and a predetermined time length to each radio terminal by using a first radio frequently ensured for the LTE. The LTE base station can therefore perform stable communication, and, for example, is thought to be able to complete the transmission of allocated data within a scheduled period.

On the other hand, a wireless LAN AP communicates with a radio terminal by using a second radio frequency such as an ISM band (Industry Science Medical frequency band) and CSMA (Carrier Sense Multiple Access) without scheduling. For this reason, the wireless LAN AP sometimes cannot transmit distributed data or may take a very long time to transmit the data depending on the degree of congestion of radio resources.

This poses a problem that when packets to be transmitted to one radio terminal are distributed to an LTE base station and a wireless LAN AP, the packets distributed to the wireless LAN AP may not be properly transmitted, even though the packets distributed to the LTE base station can be properly transmitted. Note that this problem arises when a communication apparatus which transmits packets to one radio terminal performs communication at a radio frequency that allows communication without being based on scheduling. A similar problem can arise even when this communication apparatus is not a wireless LAN AP. That is, even when a communication function in an LTE base station performs communication in the ISM band in a form similar to that of LTE, avoiding interference with communication of another communication apparatus which performs communication without being based on scheduling will lead to a failure to transmit any signals or will cause a large delay.

The present invention has been made in consideration of the above problems, and properly distributes transmission target signals (data) to a plurality of communication apparatuses, which concurrently transmit signals to another communication apparatus, in accordance with situations.

### SOLUTION TO PROBLEM

The present invention provides a control apparatus as defined in Claim 1 of the appended claims. Also provided is a wireless LAN access point as defined in Claim 7, control methods as defined in Claims 10 and 11, and programs as defined in Claims 12 and 13.

### ADVANTAGEOUS EFFECTS OF INVENTION

According to the present invention, it is possible to properly distribute transmission target signals (data) to a plurality of communication apparatuses which concurrently transmit signals to another communication apparatus in accordance with situations.

Other features and advantages of the present invention will be apparent from the following description taken in conjunction with the accompanying drawings, in which like reference characters designate the same or similar parts throughout the drawings.

### BRIEF DESCRIPTION OF DRAWINGS

The accompanying drawings, which are incorporated in and constitute a part of the specification, illustrate embodiments of the invention and, together with the description, serve to explain the principles of the invention.
Fig. 1 is a conceptual view showing an example of the arrangement of a radio communication system in which a plurality of radio communication techniques is utilized;
Fig. 2 is a conceptual view showing an example of communication by LTE and a wireless LAN that is concurrently performed with a radio terminal;
Fig. 3 is a block diagram showing an example of the hardware arrangements of a control apparatus, a base station apparatus, and an access point;
Fig. 4 is a block diagram showing an example of the functional arrangement of the control apparatus;
Fig. 5 is a block diagram showing an example of the functional arrangement of the access point;
Fig. 6 is a block diagram showing an example of the functional arrangement of the base station apparatus; and
Fig. 7 is a sequence chart showing a processing procedure in a radio communication system.

### DESCRIPTION OF EMBODIMENTS

An embodiment of the present invention will be described in detail below with reference to the accompanying drawings.

### (Radio Communication System)

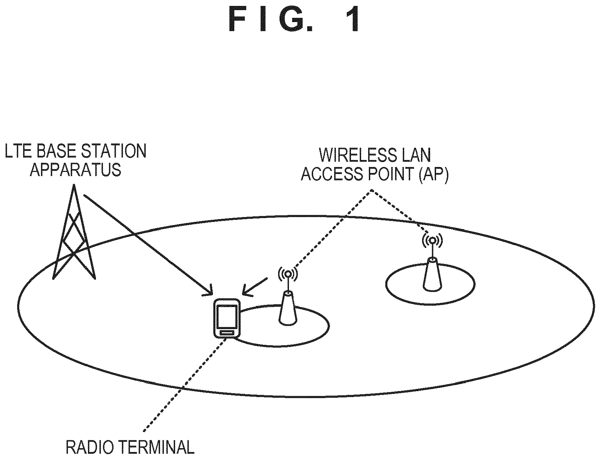

Fig. 1 shows an example of the arrangement of a radio communication system according to this embodiment. The radio communication system includes, for example, a Long Term Evolution (LTE) base station apparatus, a wireless LAN access point (AP), and a radio terminal (to be referred to as a "terminal" hereinafter). Note that the base station apparatus may be, for example, a base station apparatus complying with another radio communication standard such as cellular telephony of a generation before LTE, and the AP may also be a communication apparatus complying with any of the radio communication standards. Note that a wireless LAN may use, for example, a 2.4 GHz or 5.2 GHz frequency band or a millimeter or quasi-millimeter wave band such as a 60 GHz band.

Note, however, that the base station apparatus is a first communication apparatus which communicates with a terminal apparatus by using a first frequency band allocated to, for example, LTE based on scheduling complying with, for example, an LTE standard.

Assume also that the AP is a second communication apparatus which communicates with a terminal concurrently with the base station apparatus by using a second frequency band (for example, the ISM band) that allows communication without being based on scheduling. Note that the AP is allowed to use any frequency band that allows communication without being based on scheduling, and need not perform by itself communication without being based on scheduling. That is, the AP can be a communication apparatus which performs communication in consideration of communication of a wireless LAN during communication using the second frequency band in accordance with at least part of an LTE protocol, and can be a communication apparatus which functions as a general wireless LAN AP. Although Fig. 1 shows the AP located at a position different from that of the base station apparatus, the AP may be arranged at the same position. In addition, for example, the AP may be implemented as a communication function incorporated in a base station apparatus which performs communication by the same method as that of LTE. As described above, the AP in Fig. 1 can be different from a general access point, and a communication apparatus which communicates with a terminal concurrently with a base station apparatus by using the second frequency band which allows communication without being based on scheduling will be referred to as an "AP" hereinafter for the sake of convenience.

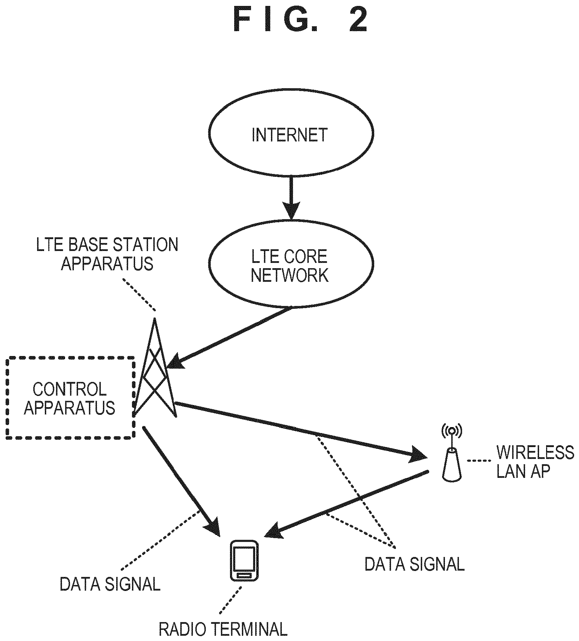

As shown in Fig. 2, in the radio communication system according to this embodiment, the base station apparatus and the AP respectively transmit data signals (packets) to a terminal. The data to be transmitted to this terminal is, for example, data obtained from the Internet, and reaches the base station apparatus via, for example, an LTE core network (to which the base station apparatus is connected). In the example shown in Fig. 2, the base station apparatus transfers at least some of the incoming data to the AP. Note that the base station apparatus may transmit all the incoming data as a radio signal to the terminal without transferring any data to the AP. In addition, in the example shown in Fig. 2, the AP receives the data transferred from the base station apparatus, but may receive the data transferred from, for example, any of the nodes in the core network to which the base station apparatus is connected.

According to this embodiment, the radio communication system includes a control apparatus which decides to which either the base station apparatus or the AP the system transfers a data packet to be transmitted to the terminal. This control apparatus may be included in, for example, the base station apparatus, as shown in Fig. 2, or may be included in a node in the core network to which the base station apparatus is connected. When transferring packets to the AP from the base station, the base station apparatus transfers, to the AP, packets decided by the other control apparatus as packets to be transmitted by the AP based on the distribution of packets decided by the control apparatus. In addition, when transferring packets to the AP from the node in the core network, this node transfers, to the AP, packets decided by the control apparatus as packets to be transmitted by the AP based on the distribution of packets decided by the control apparatus. The node transfers packets, to the base station apparatus, packets decided by the control apparatus as packets to be transmitted by the base station apparatus based on the distribution of packets decided by the control apparatus.

Consider a case in which the control apparatus has distributed packets based on, for example, a peak throughput, and has distributed a large amount of packets to the AP. At this time, the base station apparatus can perform communication by using a frequency band dedicated to LTE based on scheduling, and hence is likely to be able to transmit distributed packets to the terminal within a scheduled period. In contrast to this, even when the AP itself performs scheduling, communication speed or communication quality cannot sometimes be guaranteed because other apparatuses may perform communication without being based on scheduling in the frequency band in use. The same applies to a case in which the AP itself performs communication without being based on scheduling. Accordingly, at the timing when the AP tries to perform communication, another apparatus may use the frequency band, and hence the AP may not complete the transmission of distributed packets to the terminal within a scheduled period depending on the degree of congestion of the frequency band.

The control apparatus should therefore decide the distribution of packets in accordance with loads on the AP side, such as how long does it take for the AP to complete the transmission of a unit amount of data. For this reason, in this embodiment, the AP transmits information indicating the load state of the AP side to the control apparatus, and the control apparatus obtains the information indicating the load state from the AP and decides the distribution of packets based on the obtained information. Deciding the distribution of packets in consideration of the load state of the AP can reduce the amount of packets to be distributed to the AP when the load on the AP is heavy and hence it is likely to cause a failure to transmit, to the terminal, packets transferred to the AP or likely to increase a transmission delay. This can increase the probability of completing the transmission of packets, transferred to the AP, to the terminal within a scheduled or expected period. In addition, when the load on the AP is light, the throughput of the overall system can be improved by increasing the amount of packets to be distributed to the AP.

Note that information indicating a load state which is transmitted from the AP to the control apparatus includes, for example, information about the time from the reception of packets to the completion of the transmission of the packets to the terminal by the AP. Note that this time can be regarded as the buffer holding time of packets in the AP. This information can also be information about the maximum value, average value, or jitter of the time taken to complete the transmission of packets to the terminal. In addition, information indicating a load state may include information about a transmission delay in the transmission of packets from the AP to the terminal, for example, information about the maximum value, average value, or jitter of a transmission delay time. Upon obtaining at least any of these pieces of information, the control apparatus can decide not to distribute any packets to the AP, when the value of the time included in the obtained information exceeds an allowable delay time. Alternatively, the control apparatus may decide to distribute, to the AP, an amount of packets which is proportional to the reciprocal of the value of the time included in the obtained information. This makes it possible to determine that the load on the AP is light, when the buffer holding time or transmission delay of packets in the AP is short. It is therefore possible to improve the system throughput by increasing the amount of packets to be distributed to the AP. In contrast, when the buffer holding time or transmission delay of packets in the AP is long, it is possible to determine that the load on the AP is heavy. This makes it possible to transmit desired data to the terminal within, for example, a scheduled period, by eliminating or reducing the amount of packets to be distributed to the AP.

In addition, information indicating a load state can include information about the number of times of retransmission or the number of times of packet collision until the completion of the transmission of packets from the AP to the terminal. Note that these numbers of times can be information about maximum values or average values. Assume that the control apparatus has obtained at least any of these pieces of information. In this case, if, for example, the number of times included in the obtained information exceeds a predetermined threshold, the control apparatus can decide not to distribute any packets to the AP. The control apparatus can also decide to distribute, to the AP, an amount of packets proportional to the reciprocal of the number of times included in the obtained information. This can improve the system throughput by increasing the amount of packets distributed to the AP when the number of times of retransmission of packets or the number of times of packet collision is small. On the other hand, if the number of times of retransmission of packets or the number of times of packet collision is large, the control apparatus can determine that the communication load on the AP is heavy. This makes it possible to transmit desired data to the terminal within, for example, a scheduled period by eliminating or reducing packets to be distributed to the AP.

In addition, information indicating a load state can include information about the ratio of the periods during which the AP has held data which has not been transmitted within a predetermined period, that is, the ratio of the length of the period during which packets are stored in the buffer in the AP within the predetermined period. Note that this ratio can be, for example, maximum value information or average value information. In this case, the period during which packets are stored in the buffer indicates the period during which at least one packet to be wirelessly transmitted is stored in the buffer in the AP. In addition, information indicating a load state may include information about the ratio of the periods during which the AP has held non-transmitted data to the sum of the length of the periods and the length of a channel available period at a frequency at which the AP performs communication. That is, this ratio can be expressed as (the period during which packets are stored in the buffer)/(the period during which packets are stored in the buffer + a channel available time). If, for example, the value of the ratio included in obtained information exceeds a predetermined value, the control apparatus can decide not to distribute any packet to the AP. In addition, the control apparatus may decide to distribute, to the AP, an amount of packets proportional to the reciprocal of the value of the ratio included in obtained information. This allows the control apparatus to determine that the load on the AP is heavier as the ratio of the period during which packets are held in the buffer in a predetermined period or the like increases. This makes it possible to distribute a proper amount of packets in accordance with the magnitude of a load.

Note that information indicating a load state may include two or more pieces of the above pieces of information. In addition, the control apparatus may decide the distribution of packets for each packet attribute in consideration of the obtained information indicating the load state described above. If, for example, the obtained information indicating the load state indicates that the load on the AP is heavy, the control apparatus may distribute all the packets requiring real-time properties to the base station apparatus without distributing any of such packets to the AP. In this case, the control apparatus can change the amount of packets not requiring real-time handling which are to be distributed to the AP in accordance with the magnitude of a load in the manner described above. With this operation, distributing data with high real-time requirements to the AP side can prevent a failure to transmit packets to the terminal within a required latency range.

The arrangements of the control apparatus, base station apparatus, and AP, which perform the above processing, and processing procedures executed by them will be described in detail below.

### (Hardware Arrangements of Control Apparatus, Base Station Apparatus, and AP)

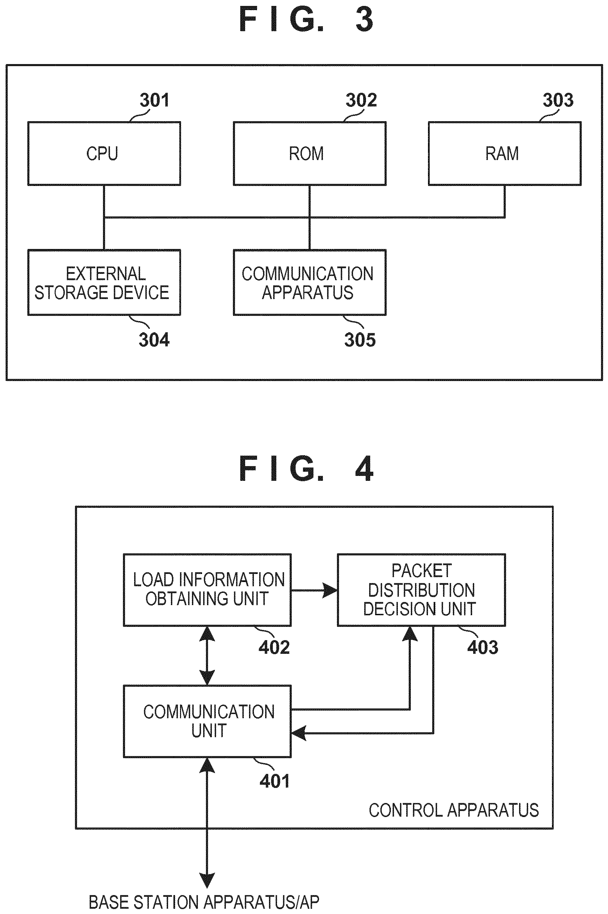

Fig. 3 shows an example of the hardware arrangements of the control apparatus, base station apparatus, and AP. The control apparatus, the base station apparatus, and the AP have similar hardware arrangements as shown in, for example, Fig. 3, and each include, for example, a CPU 301, a ROM 302, a RAM 303, an external storage device 304, and a communication apparatus 305. In each of the control apparatus, the base station apparatus, and the AP, for example, the CPU 301 executes a program for implementing each function of each apparatus which is recorded in, for example, one of the ROM 302, the RAM 303, and the external storage device 304.

In each of the control apparatus, the base station apparatus, and the AP, for example, the CPU 301 controls the communication apparatus 305 to perform communication among the control apparatus, the base station apparatus, and the AP. Although Fig. 3 shows that the control apparatus, the base station apparatus, and the AP each have one communication apparatus 305, this is not exhaustive. For example, the base station apparatus and the AP each may have a first communication apparatus (for example, a wired communication apparatus) for communication among the control apparatus, the base station apparatus, and the AP and a second communication apparatus (for example, a radio communication apparatus) for communication with the terminal.

Note that the control apparatus, the base station apparatus, and the AP each may have hardware dedicated to execute each function or may execute some functions using hardware while executing the remaining functions using a computer which runs programs. Alternatively, all the functions may be executed by the computer and the programs.

### (Functional Arrangement of Control Apparatus)

Fig. 4 shows an example of the functional arrangement of the control apparatus. The control apparatus includes, as its components, for example, a communication unit 401, a load information obtaining unit 402, and a packet distribution decision unit 403. The communication unit 401 has a function of communicating with the base station apparatus or the AP. The load information obtaining unit 402 obtains information indicating a load state like that described above from the AP via the communication unit 401. The obtained information indicating the load state is input to the packet distribution decision unit 403. As described above, the packet distribution decision unit 403 decides, in accordance with the load state of the AP, the distribution of packets, that is, whether to cause the base station apparatus or the AP to transmit packets to be transmitted to the terminal. Note that at this time, the packet distribution decision unit 403 obtains information about packets to be transmitted to the terminal from, for example, the core network via the communication unit 401.

Note that when the base station apparatus is to transfer packets to the AP, the packet distribution decision unit 403 notifies the base station apparatus of information about the decided distribution via the communication unit 401. The base station apparatus specifies those packets, of the packets obtained from the core network, which are to be transferred to the AP based on this notified information, and transfers the specified packets to the AP. Note that when the control apparatus is included in the base station apparatus, this notification is transferred to a functional unit which, for example, transfers packets via a bus or the like in the base station apparatus. In addition, when the control apparatus is included in a node in the core network to which the base station apparatus is connected, the above notification can be performed via the core network.

When a node in the core network to which the base station apparatus is connected is to transfer packets to the AP, the packet distribution decision unit 403 notifies the node of information about the decided distribution via the communication unit 401. The node specifies, based on this notified information, those packets, of the packets to be transmitted to the terminal, which are to be transferred to the AP, and transfers the specified packets to the AP. This node also transfers packets other than those to be transferred to the AP to the base station apparatus. Note that when the control apparatus is included in the node, this notification is transferred to a functional unit which transfers packets to the base station apparatus or the AP via a bus in the node. Alternatively, when the control apparatus is not included in the node which transfers packets to the base station apparatus or the AP, the above notification is performed via some kind of line in the core network.

### (Functional Arrangement of Access Point)

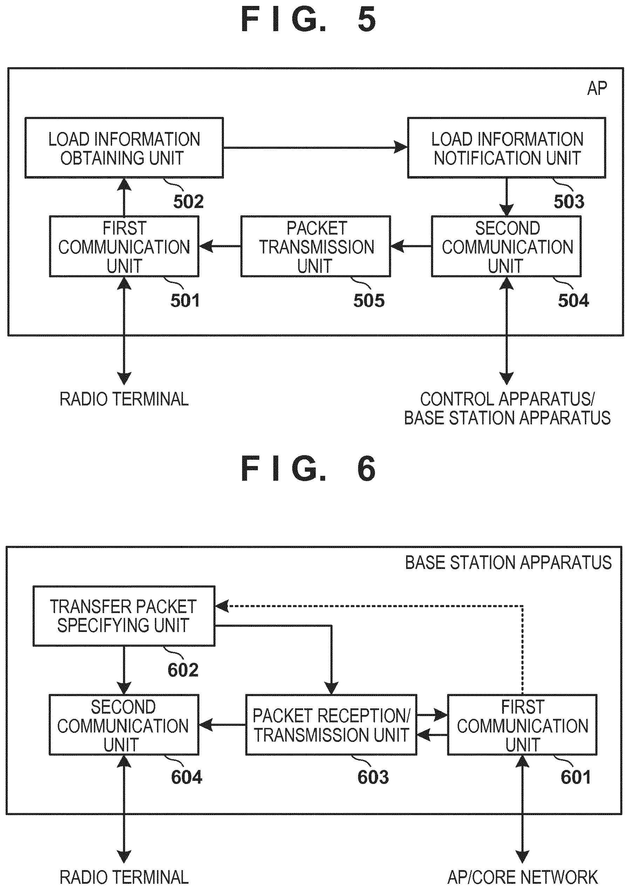

Fig. 5 shows an example of the functional arrangement of the access point (AP). The AP includes, as its functional components, a first communication unit 501, a load information obtaining unit 502, a load information notification unit 503, a second communication unit 504, and a packet transmission unit 505.

The first communication unit 501 can be a radio communication interface which performs communication in a frequency band (for example, the ISM band) in which another communication apparatus can perform communication without being based on scheduling. The first communication unit 501 communicates with, for example, the terminal based on a wireless LAN communication protocol such as the CSMA protocol without being based on scheduling. Note that the first communication unit 501 may communicate with the terminal by using signals like those used for the LTE in a format like the LTE format based on scheduling at least partially. Even if the first communication unit 501 performs scheduling, because another communication apparatus uses a frequency band that allows communication without being based on scheduling, packet collision can occur. While the frequency band is congested and the load is heavy, the first communication unit 501 tends to be subjected to increases in the number of times of retransmission, the number of times of packet collision, transmission delay, the buffer holding time of packets, and the time ratio of packets stored in the buffer.

The load information obtaining unit 502 monitors the first communication unit 501 to obtain, for example, any of pieces of information indicating the number times of retransmission, the number of times of packet collision, transmission delay, the buffer holding time of packets, and whether any packets are stored in the buffer. Note that the load information obtaining unit 502 may specify the average value or jitter value of the obtained transmission delays or the buffer holding times of packets or calculate the time ratio of packets stored in the buffer. The load information obtaining unit 502 inputs the obtained or calculated information indicating the load state of the AP to the load information notification unit 503. The load information notification unit 503 converts the obtained information into a signal format which the control apparatus can receive, and transmits the resultant signal to the control apparatus via, for example, the second communication unit 504. The second communication unit 504 is, for example, at least either of wired and wireless communication interfaces for communication with the control apparatus or the base station apparatus. Note that the AP can be one functional unit in the base station apparatus which is in charge of radio communication in a frequency band in which another communication apparatus can perform communication without being based on scheduling. In this case, communication with the base station apparatus can be performed via, for example, a bus in the base station apparatus. When the control apparatus is included in the base station apparatus, the second communication unit 504 can indirectly communicate with the control apparatus by communicating with the base station apparatus. In addition, when the control apparatus is included in a node in the core network to which the base station apparatus is connected, the second communication unit 504 may communicate with the control apparatus in the node in the core network. Alternatively, the second communication unit 504 may communicate with the control apparatus in the node in the core network without via the base station apparatus.

The packet transmission unit 505 receives packets from the base station apparatus or a node in the core network, which transfers, to the AP, packets to be transmitted to the terminal, via the second communication unit 504, and transmits the packets to the terminal via the first communication unit 501. At this time, the amount or attribute of packets received from the base station apparatus or the node in the core network is decided based on a load on the AP which the load information notification unit 503 has notified. For this reason, the first communication unit 501 can transmit the received packets to the terminal within a scheduled period with high probability.

### (Functional Arrangement of Base Station Apparatus)

Fig. 6 shows an example of the functional arrangement of the base station apparatus. The base station apparatus includes, as its functional components, for example, a first communication unit 601, a transfer packet specifying unit 602, a packet reception/transmission unit 603, and a second communication unit 604. The first communication unit 601 is, for example, at least either of wired and wireless communication interfaces which can be connected to the AP or the core network. Note that when the control apparatus is included in a node in the core network, the base station apparatus communicates with the control apparatus via the first communication unit 601.

The transfer packet specifying unit 602 obtains, for example, information about the decision of the distribution of packets for the designation of packets to be transferred from the control apparatus included in a node in the core network to the AP via the first communication unit 601. The transfer packet specifying unit 602 then specifies those packets, of the packets to be transmitted to the terminal, which should be transferred to the AP based on the obtained information, and inputs the specified packets to the packet reception/transmission unit 603. Note that the transfer packet specifying unit 602 can be a control apparatus which decides the distribution of packets. In this case, because information about the decision of the distribution of packets is generated internally, the first communication unit 601 need not obtain the information. In this case, however, the transfer packet specifying unit 602 obtains information indicating the load state of the AP from the AP via the first communication unit 601, and decides packets distributed to the AP in the above manner.

The packet reception/transmission unit 603 receives packets to be transmitted to the terminal via the first communication unit 601. The packet reception/transmission unit 603 transfers those packets, of the received packets, which are specified to be transferred to the AP by the transfer packet specifying unit 602, to the AP via the first communication unit 601. In addition, the packet reception/transmission unit 603 transmits, to the terminal via the second communication unit 604, packets which are not specified to be transferred to the AP.

The second communication unit 604 is a radio communication interface which wirelessly communicates with the terminal based on scheduling in accordance with, for example, the LTE communication protocol. Note that the second communication unit 604 may not comply with the LTE communication protocol as long as the frequency band in use is the same communication protocol as that used for communication by another communication apparatus and the communication protocol is based on scheduling. That is, the second communication unit 604 may perform radio communication by using a communication technique other than the LTE as long as the communication technique in use ensures a dedicated frequency band.

Note that when the base station apparatus does not transfer, to the AP, packets to be transmitted from the base station apparatus to the terminal, for example, the transfer packet specifying unit 602 may be omitted. In this case, the packet reception/transmission unit 603 is only required to have a function of only transmitting packets simply received by the first communication unit 601 to the terminal via the second communication unit 604, and the function concerning the transfer of packets to the AP may be omitted.

### (Processing Procedure)

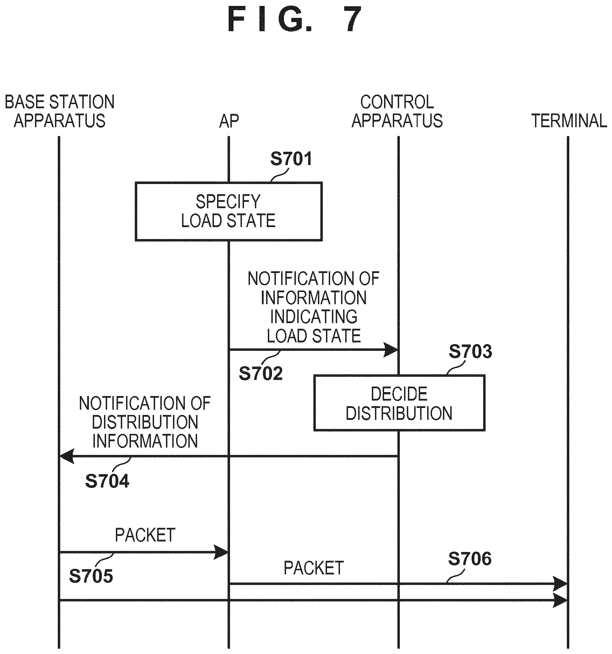

Fig. 7 shows an example of a processing procedure in the radio communication system according to this embodiment. The following will exemplify a case in which all packets transmitted to the terminal are temporarily aggregated in the base station apparatus, and the base station apparatus transfers the packets to the AP in accordance with the decision of the distribution of packets by the control apparatus. Note that the control apparatus may be included in the base station apparatus or may exist as another apparatus.

First of all, the AP specifies the load state of radio communication by, for example, monitoring the first communication unit 501 (step S701). The AP then notifies the control apparatus of the information indicating the specified load state (step S702). Note that when the control apparatus is included in the base station apparatus, the AP notifies the base station apparatus of this information. In addition, also when the control apparatus is included in a node in the core network to which the base station apparatus is connected, the AP may transmit the information to the base station apparatus, and cause the base station apparatus to transfer the information to the node.

Upon obtaining information indicating a load state, the control apparatus classifies the packets to be transmitted to the terminal into packets to be transmitted from the base station apparatus to the terminal and packets to be transmitted from the AP to the terminal, thereby deciding the distribution of the packets (step S703). The control apparatus notifies the base station apparatus of the decision result on the distribution of the packets (step S704). Note that the control apparatus may decide, for each packet, whether to distribute it to the base station apparatus or the AP, or may decide the distribution of packets as the ratio of packets to be distributed. That is, the control apparatus can specify packets, of a sequence of packets, as packets to be transmitted from the base station apparatus to the terminal and packets to be transmitted from the AP to the terminal in accordance with, for example, the sequence numbers of packets. In addition, the control apparatus may decide, for example, only the ratio of packets, for example, 70% of the packets, to be transmitted from the base station apparatus. Thereafter, an apparatus configured to actually distribute packets afterward may distribute the packets in accordance with the ratio.

Upon receiving the notification of the distribution result from the control apparatus, the base station apparatus transfers, to the AP, those packets, of the packets to be transmitted to the terminal, which should be transmitted from the AP (step S705). The base station apparatus then transmits the remaining packets to the terminal, and the AP transmits the packets transferred from the base station apparatus to the terminal (step S706).

Note that all the packets to be transmitted to the terminal are aggregated in a node in the core network to which the base station apparatus is connected, and the control apparatus notifies the node of the decision result on the distribution of packets. The node transfers packets to the base station apparatus and the AP in accordance with the decision of the distribution by the control apparatus. The base station apparatus then transmits the incoming packets to the terminal without further distributing the packets. The AP also transmits the incoming packets to the terminal. In this case, therefore, the notification destination of information about the distribution in step S704 differs from that described above, and the node in the core network transfers packets to the base station apparatus and the AP in step S705.

As described above, the amount of packets to be transmitted from the AP to the terminal changes in accordance with the load state of the AP. When the load on the AP is heavy, reducing the amount of packets to be transmitted from the AP to the terminal can increase the probability of completing the transmission of data to be transmitted to the terminal within a scheduled period. When the load on the AP is light, increasing the amount of packets to be transmitted from the AP to the terminal can increase the throughput of the overall system. In addition, when, for example, the load on the AP is heavy, transmitting packets requiring real-time handling from the base station apparatus to the terminal without transferring the packets to the AP, thereby ensuring real-time properties.

The present invention is not limited to the above embodiments, and various changes and modifications can be made within the scope of the present invention as set out in the following claims.

## Claims

1. A control apparatus for controlling communication when a base station apparatus of a cellular network configured to perform communication based on scheduling by using a first frequency, and a wireless LAN access point configured to perform communication by using a second frequency that allows communication without being based on scheduling, concurrently communicate with a communication apparatus, the control apparatus **characterized by** comprising:
obtaining means (402) for obtaining information indicating a load state of the wireless LAN access point from the wireless LAN access point; and
decision means (403) for deciding distribution of data transmitted to the communication apparatus with respect to the base station apparatus and the wireless LAN access point based on the information;
wherein the control apparatus is included in the base station apparatus or in a node in a core network to which the base station apparatus is connected; and
wherein the information indicating the load state includes at least one of:
information about an amount of time over which a channel is in use by the wireless LAN access point,
information about a number of signals which are transmitted by the wireless LAN access point periodically within a period of measurement of whether the channel is in use or not by the wireless LAN access point, and
information about a length of a transmission period of the signals transmitted periodically by the wireless LAN access point.

2. The control apparatus according to claim 1, wherein the control apparatus is included in the base station apparatus.

3. The control apparatus according to claim 1, wherein the control apparatus is included in a node in a core network to which the base station apparatus is connected.

4. The control apparatus according to claim 3, further comprising notifying means (401) for notifying the base station apparatus of information indicating the decided distribution.

5. The control apparatus according to any one of claims 1 to 4, wherein the wireless LAN access point is configured to communicate with the communication apparatus by using the second frequency without being based on scheduling.

6. The control apparatus according to any one of claims 1 to 4, wherein the wireless LAN access point is configured to periodically notify the information relating to a time ratio of a channel being unused.

7. A wireless LAN access point for communicating with a communication apparatus by using a second frequency that allows communication without being based on scheduling, wherein the communication apparatus concurrently communicates with a base station apparatus of a cellular network configured to perform communication based on scheduling by using a first frequency, the wireless LAN access point **characterized by** comprising:
first transmission means (504) for transmitting information indicating a load state of the wireless LAN access point to a control apparatus configured to decide distribution of data which the wireless LAN access point and the base station apparatus transmit to the communication apparatus;
obtaining means (504) for obtaining data distributed by the control apparatus based on the information as data which the wireless LAN access point transmits to the communication apparatus; and
second transmission means (501) for transmitting the obtained data to the communication apparatus;
wherein the control apparatus is included in the base station apparatus or in a node in a core network to which the base station apparatus is connected; and
wherein the information indicating the load state includes at least one of:
information about an amount of time over which a channel is in use by the wireless LAN access point,
information about a number of signals which are transmitted by the wireless LAN access point periodically within a period of measurement of whether the channel is in use or not by the wireless LAN access point, and
information about a length of a transmission period of the signals transmitted periodically by the wireless LAN access point.

8. The wireless LAN access point according to claim 7, wherein the control apparatus is included in the base station apparatus, and
the obtaining means (504) is configured to obtain, from the base station apparatus, data distributed as data which the wireless LAN access point transmits to the communication apparatus.

9. The wireless LAN access point according to claim 7, wherein the control apparatus is included in a node in a core network to which the base station apparatus is connected, and
the obtaining means (504) is configured to obtain, from the core network or the base station apparatus, data distributed as data which the wireless LAN access point transmits to the communication apparatus.

10. A control method for a control apparatus which controls communication when a base station apparatus of a cellular network configured to perform communication based on scheduling by using a first frequency, and a wireless LAN access point configured to perform communication by using a second frequency that allows communication without being based on scheduling, concurrently communicate with a communication apparatus, the control method **characterized by** comprising:
obtaining (S702) information indicating a load state of the wireless LAN access point from the wireless LAN access point; and
deciding (S703) distribution of data transmitted to the communication apparatus with respect to the base station apparatus and the wireless LAN access point based on the information;
wherein the control apparatus is included in the base station apparatus or in a node in a core network to which the base station apparatus is connected; and
wherein the information indicating the load state includes at least one of:
information about an amount of time over which a channel is in use by the wireless LAN access point,
information about a number of signals which are transmitted by the wireless LAN access point periodically within a period of measurement of whether the channel is in use or not by the wireless LAN access point, and
information about a length of a transmission period of the signals transmitted periodically by the wireless LAN access point.

11. A control method for a wireless LAN access point which communicates with a communication apparatus by using a second frequency that allows communication without being based on scheduling, wherein the communication apparatus concurrently communicates with a base station apparatus of a cellular network configured to perform communication based on scheduling by using a first frequency, the control method **characterized by** comprising:
transmitting (S702) information indicating a load state of the wireless LAN access point to a control apparatus configured to decide distribution of data which the wireless LAN access point and the base station apparatus transmit to the communication apparatus;
obtaining data distributed by the control apparatus based on the information as data which the wireless LAN access point transmits to the communication apparatus; and
transmitting the obtained data to the communication apparatus;
wherein the control apparatus is included in the base station apparatus or in a node in a core network to which the base station apparatus is connected; and
wherein the information indicating the load state includes at least one of:
information about an amount of time over which a channel is in use by the wireless LAN access point,
information about a number of signals which are transmitted by the wireless LAN access point periodically within a period of measurement of whether the channel is in use or not by the wireless LAN access point, and
information about a length of a transmission period of the signals transmitted periodically by the wireless LAN access point.

12. A program for causing a computer incorporated in a control apparatus, which controls communication when a base station apparatus of a cellular network configured to perform communication based on scheduling by using a first frequency, and a wireless LAN access point configured to perform communication by using a second frequency that allows communication without being based on scheduling, concurrently communicate with a communication apparatus, to execute
obtaining (S702) information indicating a load state of the wireless LAN access point from the wireless LAN access point; and
deciding (S703) distribution of data transmitted to the communication apparatus with respect to the base station apparatus and the wireless LAN access point based on the information;
wherein the control apparatus is included in the base station apparatus or in a node in a core network to which the base station apparatus is connected; and
wherein the information indicating the load state includes at least one of:
information about an amount of time over which a channel is in use by the wireless LAN access point,
information about a number of signals which are transmitted by the wireless LAN access point periodically within a period of measurement of whether the channel is in use or not by the wireless LAN access point, and
information about a length of a transmission period of the signals transmitted periodically by the wireless LAN access point.

13. A program for causing a computer incorporated in a wireless LAN access point, which communicates with a communication apparatus by using a second frequency that allows communication without being based on scheduling, wherein the communication apparatus concurrently communicates with a base station apparatus of a cellular network configured to perform communication based on scheduling by using a first frequency, to execute
transmitting (S702) information indicating a load state of the wireless LAN access point to a control apparatus configured to decide distribution of data which the wireless LAN access point and the base station apparatus transmit to the communication apparatus;
obtaining data distributed by the control apparatus based on the information as data which the wireless LAN access point transmits to the communication apparatus; and
transmitting the obtained data to the communication apparatus;
wherein the control apparatus is included in the base station apparatus or in a node in a core network to which the base station apparatus is connected; and
wherein the information indicating the load state includes at least one of:
information about an amount of time over which a channel is in use by the wireless LAN access point,
information about a number of signals which are transmitted by the wireless LAN access point periodically within a period of measurement of whether the channel is in use or not by the wireless LAN access point, and
information about a length of a transmission period of the signals transmitted periodically by the wireless LAN access point.

## Patentansprüche

1. Steuervorrichtung zum Steuern einer Kommunikation, wenn eine Basisstationsvorrichtung eines Mobilfunknetzwerks, die dazu konfiguriert ist, eine Kommunikation auf der Basis einer Ablaufplanung durch Verwendung einer ersten Frequenz durchzuführen, und ein drahtloser LAN-Zugangspunkt, der dazu konfiguriert ist, eine Kommunikation durch Verwendung einer zweiten Frequenz, die eine Kommunikation ermöglicht, ohne auf einer Ablaufplanung basiert zu sein, durchzuführen, gleichzeitig mit einer Kommunikationsvorrichtung kommunizieren, wobei die Steuervorrichtung **gekennzeichnet ist durch** Umfassen:
ein Bezugsmittel (402) zum Beziehen einer Information, die einen Belastungszustand des drahtlosen LAN-Zugangspunkts angibt, von dem drahtlosen LAN-Zugangspunkt und
ein Entscheidungsmittel (403) zum Entscheiden einer Verteilung von Daten, die an die Kommunikationsvorrichtung übertragen werden, in Bezug auf die Basisstationsvorrichtung und den drahtlosen LAN-Zugangspunkt auf der Basis der Information;
wobei die Steuervorrichtung in die Basisstationsvorrichtung oder in einen Knoten in einem Kernnetzwerk, mit dem die Basisstationsvorrichtung verbunden ist, eingebunden ist und
wobei die Information, die den Belastungszustand angibt, mindestens eine der folgenden beinhaltet:
Information zu einem Zeitraum, über den ein Kanal im Gebrauch durch den drahtlosen LAN-Zugangspunkt ist,
Information zu einer Anzahl von Signalen, die von dem drahtlosen LAN-Zugangspunkt periodisch übertragen werden, innerhalb einer Periode einer Messung, ob der Kanal im Gebrauch durch den drahtlosen LAN-Zugangspunkt ist oder nicht, und
Information zu einer Länge einer Übertragungsperiode der Signale, die von dem drahtlosen LAN-Zugangspunkt periodisch übertragen werden.

2. Steuervorrichtung nach Anspruch 1, wobei die Steuervorrichtung in die Basisstationsvorrichtung eingebunden ist.

3. Steuervorrichtung nach Anspruch 1, wobei die Steuervorrichtung in einen Knoten in einem Kernnetzwerk, mit dem die Basisstationsvorrichtung verbunden ist, eingebunden ist.

4. Steuervorrichtung nach Anspruch 3, weiterhin umfassend ein Benachrichtigungsmittel (401) zum Benachrichtigen der Basisstationsvorrichtung über eine Information, die die entschiedene Verteilung angibt.

5. Steuervorrichtung nach einem der Ansprüche 1 bis 4, wobei der drahtlose LAN-Zugangspunkt dazu konfiguriert ist, mit der Kommunikationsvorrichtung durch Verwendung der zweiten Frequenz, ohne auf einer Ablaufplanung basiert zu sein, zu kommunizieren.

6. Steuervorrichtung nach einem der Ansprüche 1 bis 4, wobei der drahtlose LAN-Zugangspunkt dazu konfiguriert ist, periodisch über die Information in Bezug auf ein Zeitverhältnis eines Kanals, der ungenutzt ist, zu benachrichtigen.

7. Drahtloser LAN-Zugangspunkt zum Kommunizieren mit einer Kommunikationsvorrichtung durch Verwendung einer zweiten Frequenz, die eine Kommunikation ermöglicht, ohne auf einer Ablaufplanung basiert zu sein, wobei die Kommunikationsvorrichtung gleichzeitig mit einer Basisstationsvorrichtung eines Mobilfunknetzwerks kommuniziert, die dazu konfiguriert ist, eine Kommunikation auf der Basis einer Ablaufplanung durch Verwendung einer ersten Frequenz durchzuführen, wobei der drahtlose LAN-Zugangspunkt **gekennzeichnet ist durch** Umfassen:
ein erstes Übertragungsmittel (504) zum Übertragen einer Information, die einen Belastungszustand des drahtlosen LAN-Zugangspunkts angibt, an eine Steuervorrichtung, die dazu konfiguriert ist, eine Verteilung von Daten, die der drahtlose LAN-Zugangspunkt und die Basisstationsvorrichtung an die Kommunikationsvorrichtung übertragen, zu entscheiden;
ein Bezugsmittel (504) zum Beziehen von Daten, die von der Steuervorrichtung auf der Basis der Information als Daten verteilt werden, die der drahtlose LAN-Zugangspunkt an die Kommunikationsvorrichtung überträgt; und
ein zweites Übertragungsmittel (501) zum Übertragen der bezogenen Daten an die Kommunikationsvorrichtung;
wobei die Steuervorrichtung in die Basisstationsvorrichtung oder in einen Knoten in einem Kernnetzwerk, mit dem die Basisstationsvorrichtung verbunden ist, eingebunden ist und
wobei die Information, die den Belastungszustand angibt, mindestens eine der folgenden beinhaltet:
Information zu einem Zeitraum, über den ein Kanal im Gebrauch durch den drahtlosen LAN-Zugangspunkt ist,
Information zu einer Anzahl von Signalen, die von dem drahtlosen LAN-Zugangspunkt periodisch übertragen werden, innerhalb einer Periode einer Messung, ob der Kanal im Gebrauch durch den drahtlosen LAN-Zugangspunkt ist oder nicht, und
Information zu einer Länge einer Übertragungsperiode der Signale, die von dem drahtlosen LAN-Zugangspunkt periodisch übertragen werden.

8. Drahtloser LAN-Zugangspunkt nach Anspruch 7, wobei die Steuervorrichtung in die Basisstationsvorrichtung eingebunden ist und
das Bezugsmittel (504) dazu konfiguriert ist, Daten von der Basisstationsvorrichtung zu beziehen, die als Daten verteilt werden, die der drahtlose LAN-Zugangspunkt an die Kommunikationsvorrichtung überträgt.

9. Drahtloser LAN-Zugangspunkt nach Anspruch 7, wobei die Steuervorrichtung in einen Knoten in einem Kernnetzwerk, mit dem die Basisstationsvorrichtung verbunden ist, eingebunden ist, und
das Bezugsmittel (504) dazu konfiguriert ist, Daten von dem Kernnetzwerkt oder der Basisstationsvorrichtung zu beziehen, die als Daten verteilt werden, die der drahtlose LAN-Zugangspunkt an die Kommunikationsvorrichtung überträgt.

10. Steuerverfahren für eine Steuervorrichtung, die eine Kommunikation steuert, wenn eine Basisstationsvorrichtung eines Mobilfunknetzwerks, die dazu konfiguriert ist, eine Kommunikation auf der Basis einer Ablaufplanung durch Verwendung einer ersten Frequenz durchzuführen, und ein drahtloser LAN-Zugangspunkt, der dazu konfiguriert ist, eine Kommunikation durch Verwendung einer zweiten Frequenz, die eine Kommunikation ermöglicht, ohne auf einer Ablaufplanung basiert zu sein, durchzuführen, gleichzeitig mit einer Kommunikationsvorrichtung kommunizieren, wobei das Steuerverfahren **gekennzeichnet ist durch** Umfassen:
Beziehen (S702) einer Information, die einen Belastungszustand des drahtlosen LAN-Zugangspunkts angibt, von dem drahtlosen LAN-Zugangspunkt und
Entscheiden (S703) einer Verteilung von Daten, die an die Kommunikationsvorrichtung übertragen werden, in Bezug auf die Basisstationsvorrichtung und den drahtlosen LAN-Zugangspunkt auf der Basis der Information;
wobei die Steuervorrichtung in die Basisstationsvorrichtung oder in einen Knoten in einem Kernnetzwerk, mit dem die Basisstationsvorrichtung verbunden ist, eingebunden ist und
wobei die Information, die den Belastungszustand angibt, mindestens eine der folgenden beinhaltet:
Information zu einem Zeitraum, über den ein Kanal im Gebrauch durch den drahtlosen LAN-Zugangspunkt ist,
Information zu einer Anzahl von Signalen, die von dem drahtlosen LAN-Zugangspunkt periodisch übertragen werden, innerhalb einer Periode einer Messung, ob der Kanal im Gebrauch durch den drahtlosen LAN-Zugangspunkt ist oder nicht, und
Information zu einer Länge einer Übertragungsperiode der Signale, die von dem drahtlosen LAN-Zugangspunkt periodisch übertragen werden.

11. Steuerverfahren für einen drahtlosen LAN-Zugangspunkt, der mit einer Kommunikationsvorrichtung durch Verwendung einer zweiten Frequenz kommuniziert, die eine Kommunikation ermöglicht, ohne auf einer Ablaufplanung basiert zu sein, wobei die Kommunikationsvorrichtung gleichzeitig mit einer Basisstationsvorrichtung eines Mobilfunknetzwerks kommuniziert, die dazu konfiguriert ist, eine Kommunikation auf der Basis einer Ablaufplanung durch Verwendung einer ersten Frequenz durchzuführen, wobei das Steuerverfahren **gekennzeichnet ist durch** Umfassen:
Übertragen (S702) einer Information, die einen Belastungszustand des drahtlosen LAN-Zugangspunkts angibt, an eine Steuervorrichtung, die dazu konfiguriert ist, eine Verteilung von Daten, die der drahtlose LAN-Zugangspunkt und die Basisstationsvorrichtung an die Kommunikationsvorrichtung übertragen, zu entscheiden;
Beziehen von Daten, die von der Steuervorrichtung auf der Basis der Information als Daten verteilt werden, die der drahtlose LAN-Zugangspunkt an die Kommunikationsvorrichtung überträgt; und
Übertragen der bezogenen Daten an die Kommunikationsvorrichtung;
wobei die Steuervorrichtung in die Basisstationsvorrichtung oder in einen Knoten in einem Kernnetzwerk, mit dem die Basisstationsvorrichtung verbunden ist, eingebunden ist und
wobei die Information, die den Belastungszustand angibt, mindestens eine der folgenden beinhaltet:
Information zu einem Zeitraum, über den ein Kanal im Gebrauch durch den drahtlosen LAN-Zugangspunkt ist,
Information zu einer Anzahl von Signalen, die von dem drahtlosen LAN-Zugangspunkt periodisch übertragen werden, innerhalb einer Periode einer Messung, ob der Kanal im Gebrauch durch den drahtlosen LAN-Zugangspunkt ist oder nicht, und
Information zu einer Länge einer Übertragungsperiode der Signale, die von dem drahtlosen LAN-Zugangspunkt periodisch übertragen werden.

12. Programm zum Bewirken, dass ein Computer, der in eine Steuervorrichtung integriert ist, die eine Kommunikation steuert, wenn eine Basisstationsvorrichtung eines Mobilfunknetzwerks, die dazu konfiguriert ist, eine Kommunikation auf der Basis einer Ablaufplanung durch Verwendung einer ersten Frequenz durchzuführen, und ein drahtloser LAN-Zugangspunkt, der dazu konfiguriert ist, eine Kommunikation durch Verwendung einer zweiten Frequenz, die eine Kommunikation ermöglicht, ohne auf einer Ablaufplanung basiert zu sein, durchzuführen, gleichzeitig mit einer Kommunikationsvorrichtung kommunizieren, Folgendes ausführt:
Beziehen (S702) einer Information, die einen Belastungszustand des drahtlosen LAN-Zugangspunkts angibt, von dem drahtlosen LAN-Zugangspunkt und
Entscheiden (S703) einer Verteilung von Daten, die an die Kommunikationsvorrichtung übertragen werden, in Bezug auf die Basisstationsvorrichtung und den drahtlosen LAN-Zugangspunkt auf der Basis der Information;
wobei die Steuervorrichtung in die Basisstationsvorrichtung oder in einen Knoten in einem Kernnetzwerk, mit dem die Basisstationsvorrichtung verbunden ist, eingebunden ist und
wobei die Information, die den Belastungszustand angibt, mindestens eine der folgenden beinhaltet:
Information zu einem Zeitraum, über den ein Kanal im Gebrauch durch den drahtlosen LAN-Zugangspunkt ist,
Information zu einer Anzahl von Signalen, die von dem drahtlosen LAN-Zugangspunkt periodisch übertragen werden, innerhalb einer Periode einer Messung, ob der Kanal im Gebrauch durch den drahtlosen LAN-Zugangspunkt ist oder nicht, und
Information zu einer Länge einer Übertragungsperiode der Signale, die von dem drahtlosen LAN-Zugangspunkt periodisch übertragen werden.

13. Programm zum Bewirken, dass ein Computer, der in einen drahtlosen LAN-Zugangspunkt integriert ist, der mit einer Kommunikationsvorrichtung durch Verwendung einer zweiten Frequenz kommuniziert, die eine Kommunikation ermöglicht, ohne auf einer Ablaufplanung basiert zu sein, wobei die Kommunikationsvorrichtung gleichzeitig mit einer Basisstationsvorrichtung eines Mobilfunknetzwerks kommuniziert, die dazu konfiguriert ist, eine Kommunikation auf der Basis einer Ablaufplanung durch Verwendung einer ersten Frequenz durchzuführen, Folgendes ausführt:
Übertragen (S702) einer Information, die einen Belastungszustand des drahtlosen LAN-Zugangspunkts angibt, an eine Steuervorrichtung, die dazu konfiguriert ist, eine Verteilung von Daten, die der drahtlose LAN-Zugangspunkt und die Basisstationsvorrichtung an die Kommunikationsvorrichtung übertragen, zu entscheiden;
Beziehen von Daten, die von der Steuervorrichtung auf der Basis der Information als Daten verteilt werden, die der drahtlose LAN-Zugangspunkt an die Kommunikationsvorrichtung überträgt; und
Übertragen der bezogenen Daten an die Kommunikationsvorrichtung;
wobei die Steuervorrichtung in die Basisstationsvorrichtung oder in einen Knoten in einem Kernnetzwerk, mit dem die Basisstationsvorrichtung verbunden ist, eingebunden ist und
wobei die Information, die den Belastungszustand angibt, mindestens eine der folgenden beinhaltet:
Information zu einem Zeitraum, über den ein Kanal im Gebrauch durch den drahtlosen LAN-Zugangspunkt ist,
Information zu einer Anzahl von Signalen, die von dem drahtlosen LAN-Zugangspunkt periodisch übertragen werden, innerhalb einer Periode einer Messung, ob der Kanal im Gebrauch durch den drahtlosen LAN-Zugangspunkt ist oder nicht, und
Information zu einer Länge einer Übertragungsperiode der Signale, die von dem drahtlosen LAN-Zugangspunkt periodisch übertragen werden.

## Revendications

1. Appareil de contrôle pour contrôler une communication quand un appareil station de base d'un réseau cellulaire, configuré pour réaliser une communication basée sur une planification au moyen d'une première fréquence, et un point d'accès de LAN sans fil, configuré pour réaliser une communication au moyen d'une seconde fréquence qui permet une communication qui n'est pas basée sur une planification, communiquent simultanément avec un appareil de communication, l'appareil de contrôle étant **caractérisé en ce qu'**il comprend :
un moyen d'obtention (402) pour obtenir, auprès du point d'accès de LAN sans fil, une information indiquant un état de charge du point d'accès de LAN sans fil ; et
un moyen de décision (403) pour décider une distribution de données transmises à l'appareil de communication par rapport à l'appareil station de base et au point d'accès de LAN sans fil sur la base de l'information ;
l'appareil de contrôle étant inclus dans l'appareil station de base ou dans un nœud dans un réseau central auquel l'appareil station de base est connecté ; et
l'information indiquant l'état de charge incluant au moins une des informations suivantes :
une information sur une durée pendant laquelle un canal est utilisé par le point d'accès de LAN sans fil,
une information sur un nombre de signaux qui sont transmis périodiquement par le point d'accès de LAN sans fil pendant une période consistant à mesurer si le canal est utilisé ou non par le point d'accès de LAN sans fil, et
une information sur une longueur d'une période de transmission des signaux transmis périodiquement par le point d'accès de LAN sans fil.

2. Appareil de contrôle selon la revendication 1, l'appareil de contrôle étant inclus dans l'appareil station de base.

3. Appareil de contrôle selon la revendication 1, l'appareil de contrôle étant inclus dans un nœud dans un réseau central auquel l'appareil station de base est connecté.

4. Appareil de contrôle selon la revendication 3, comprenant en outre un moyen de notification (401) pour notifier à l'appareil station de base une information indiquant la distribution décidée.

5. Appareil de contrôle selon l'une quelconque des revendications 1 à 4, dans lequel le point d'accès de LAN sans fil est configuré pour communiquer avec l'appareil de communication au moyen de la seconde fréquence sans se baser sur une planification.

6. Appareil de contrôle selon l'une quelconque des revendications 1 à 4, dans lequel le point d'accès de LAN sans fil est configuré pour notifier périodiquement l'information relative à un rapport de temps d'un canal qui n'est pas utilisé.

7. Point d'accès de LAN sans fil pour communiquer avec un appareil de communication au moyen d'une seconde fréquence qui permet une communication qui n'est pas basée sur une planification, l'appareil de communication communiquant simultanément avec un appareil station de base d'un réseau cellulaire configuré pour réaliser une communication basée sur une planification au moyen d'une première fréquence, le point d'accès de LAN sans fil étant **caractérisé en ce qu'**il comprend :
un premier moyen de transmission (504) pour transmettre une information indiquant un état de charge du point d'accès de LAN sans fil à un appareil de contrôle configuré pour décider une distribution de données que le point d'accès de LAN sans fil et l'appareil station de base transmettent à l'appareil de communication ;
un moyen d'obtention (504) pour obtenir des données distribuées par l'appareil de contrôle sur la base de l'information, en tant que données que le point d'accès de LAN sans fil transmet à l'appareil de communication ; et
un second moyen de transmission (501) pour transmettre les données obtenues à l'appareil de communication ;
l'appareil de contrôle étant inclus dans l'appareil station de base ou dans un nœud dans un réseau central auquel l'appareil station de base est connecté ; et
l'information indiquant l'état de charge incluant au moins une des informations suivantes :
une information sur une durée pendant laquelle un canal est utilisé par le point d'accès de LAN sans fil,
une information sur un nombre de signaux qui sont transmis périodiquement par le point d'accès de LAN sans fil pendant une période consistant à mesurer si le canal est utilisé ou non par le point d'accès de LAN sans fil, et
une information sur une longueur d'une période de transmission des signaux transmis périodiquement par le point d'accès de LAN sans fil.

8. Point d'accès de LAN sans fil selon la revendication 7, dans lequel l'appareil de contrôle est inclus dans l'appareil station de base, et
le moyen d'obtention (504) est configuré pour obtenir, auprès de l'appareil station de base, des données distribuées en tant que données que le point d'accès de LAN sans fil transmet à l'appareil de communication.

9. Point d'accès de LAN sans fil selon la revendication 7, dans lequel l'appareil de contrôle est inclus dans un nœud dans un réseau central auquel l'appareil station de base est connecté, et
le moyen d'obtention (504) est configuré pour obtenir, auprès du réseau central ou de l'appareil station de base, des données distribuées en tant que données que le point d'accès de LAN sans fil transmet à l'appareil de communication.

10. Procédé de contrôle pour un appareil de contrôle qui contrôle une communication quand un appareil station de base d'un réseau cellulaire, configuré pour réaliser une communication basée sur une planification au moyen d'une première fréquence, et un point d'accès de LAN sans fil, configuré pour réaliser une communication au moyen d'une seconde fréquence qui permet une communication qui n'est pas basée sur une planification, communiquent simultanément avec un appareil de communication, le procédé de contrôle étant **caractérisé en ce qu'**il consiste à :
obtenir (S702), auprès du point d'accès de LAN sans fil, une information indiquant un état de charge du point d'accès de LAN sans fil ; et
décider (S703) une distribution de données transmises à l'appareil de communication par rapport à l'appareil station de base et au point d'accès de LAN sans fil sur la base de l'information ;
l'appareil de contrôle étant inclus dans l'appareil station de base ou dans un nœud dans un réseau central auquel l'appareil station de base est connecté ; et
l'information indiquant l'état de charge incluant au moins une des informations suivantes :
une information sur une durée pendant laquelle un canal est utilisé par le point d'accès de LAN sans fil,
une information sur un nombre de signaux qui sont transmis périodiquement par le point d'accès de LAN sans fil pendant une période consistant à mesurer si le canal est utilisé ou non par le point d'accès de LAN sans fil, et
une information sur une longueur d'une période de transmission des signaux transmis périodiquement par le point d'accès de LAN sans fil.

11. Procédé de contrôle pour un point d'accès de LAN sans fil qui communique avec un appareil de communication au moyen d'une seconde fréquence qui permet une communication qui n'est pas basée sur une planification, l'appareil de communication communiquant simultanément avec un appareil station de base d'un réseau cellulaire configuré pour réaliser une communication basée sur une planification au moyen d'une première fréquence, le procédé de contrôle étant **caractérisé en ce qu'**il consiste à :
transmettre (S702) une information indiquant un état de charge du point d'accès de LAN sans fil à un appareil de contrôle configuré pour décider une distribution de données que le point d'accès de LAN sans fil et l'appareil station de base transmettent à l'appareil de communication ;
obtenir des données distribuées par l'appareil de contrôle sur la base de l'information, en tant que données que le point d'accès de LAN sans fil transmet à l'appareil de communication ; et
transmettre les données obtenues à l'appareil de communication ;
l'appareil de contrôle étant inclus dans l'appareil station de base ou dans un nœud dans un réseau central auquel l'appareil station de base est connecté ; et
l'information indiquant l'état de charge incluant au moins une des informations suivantes :
une information sur une durée pendant laquelle un canal est utilisé par le point d'accès de LAN sans fil,
une information sur un nombre de signaux qui sont transmis périodiquement par le point d'accès de LAN sans fil pendant une période consistant à mesurer si le canal est utilisé ou non par le point d'accès de LAN sans fil, et
une information sur une longueur d'une période de transmission des signaux transmis périodiquement par le point d'accès de LAN sans fil.

12. Programme pour amener un ordinateur intégré dans un appareil de contrôle, qui contrôle une communication quand un appareil station de base d'un réseau cellulaire, configuré pour réaliser une communication basée sur une planification au moyen d'une première fréquence, et un point d'accès de LAN sans fil, configuré pour réaliser une communication au moyen d'une seconde fréquence qui permet une communication qui n'est pas basée sur une planification, communiquent simultanément avec un appareil de communication, à exécuter les étapes consistant à :
obtenir (S702), auprès du point d'accès de LAN sans fil, une information indiquant un état de charge du point d'accès de LAN sans fil ; et
décider (S703) une distribution de données transmises à l'appareil de communication par rapport à l'appareil station de base et au point d'accès de LAN sans fil sur la base de l'information ;
l'appareil de contrôle étant inclus dans l'appareil station de base ou dans un nœud dans un réseau central auquel l'appareil station de base est connecté ; et
l'information indiquant l'état de charge incluant au moins une des informations suivantes :
une information sur une durée pendant laquelle un canal est utilisé par le point d'accès de LAN sans fil,
une information sur un nombre de signaux qui sont transmis périodiquement par le point d'accès de LAN sans fil pendant une période consistant à mesurer si le canal est utilisé ou non par le point d'accès de LAN sans fil, et
une information sur une longueur d'une période de transmission des signaux transmis périodiquement par le point d'accès de LAN sans fil.

13. Programme pour amener un ordinateur intégré dans un point d'accès de LAN sans fil qui communique avec un appareil de communication au moyen d'une seconde fréquence qui permet une communication qui n'est pas basée sur une planification, l'appareil de communication communiquant simultanément avec un appareil station de base d'un réseau cellulaire configuré pour réaliser une communication basée sur une planification au moyen d'une première fréquence, à exécuter les étapes consistant à :
transmettre (S702) une information indiquant un état de charge du point d'accès de LAN sans fil à un appareil de contrôle configuré pour décider une distribution de données que le point d'accès de LAN sans fil et l'appareil station de base transmettent à l'appareil de communication ;
obtenir des données distribuées par l'appareil de contrôle sur la base de l'information, en tant que données que le point d'accès de LAN sans fil transmet à l'appareil de communication ; et
transmettre les données obtenues à l'appareil de communication ;
l'appareil de contrôle étant inclus dans l'appareil station de base ou dans un nœud dans un réseau central auquel l'appareil station de base est connecté ; et
l'information indiquant l'état de charge incluant au moins une des informations suivantes :
une information sur une durée pendant laquelle un canal est utilisé par le point d'accès de LAN sans fil,
une information sur un nombre de signaux qui sont transmis périodiquement par le point d'accès de LAN sans fil pendant une période consistant à mesurer si le canal est utilisé ou non par le point d'accès de LAN sans fil, et
une information sur une longueur d'une période de transmission des signaux transmis périodiquement par le point d'accès de LAN sans fil.
